# FASCICULE DE BREVET EUROPEEN

(11) **EP 0 947 486 B1**
(45) Date de publication et mention de la délivrance du brevet: **04.06.2003**
(21) Numéro de dépôt: 98105472.9
(22) Date de dépôt: 26.03.1998
(51) Int. Cl.: C04B 35/486, G04B 37/22

(54) **Procédé de fabrication d'un article coloré, en particulier de couleur orange/rouge, à base de zircone et article décoratif coloré à base de zircone obtenu selon ce procédé**
Verfahren zur Herstellung eines farbigen, insbesondere orangeroten, Gegenstandes auf Zirkonoxidbasis sowie nach diesem Verfahren hergestellter farbiger dekorativer Gegenstand
Process for producing coloured articles, particularly orange/red coloured articles, based on zirconia and coloured decorative article produced thereby

(43) Date de publication de la demande: 06.10.1999
(73) Titulaire: ASULAB S.A., 2074 Marin (CH)
(72) Inventeur: Michel, Béatrice, 1588 Montet sur Cudrefin (CH); Lemaire, Lionel, 1005 Lausanne (CH)
(74) Mandataire: Ravenel, Thierry Gérard Louis

(56) Documents cités:
- EP-A- 0 218 853
- EP-A- 0 700 796

## Description

L'invention concerne un procédé de fabrication d'un article coloré à base de zircone, en particulier d'un tel article présentant une couleur comprise dans la gamme de l'orange au rouge/bordeaux et réalisé par frittage. Un tel article sera désigné dans la suite de la description "article orange/rouge" pour des raisons de commodités.

L'invention concerne également un article décoratif orange/rouge à base de zircone notamment obtenu selon ce procédé ci-dessus.

Il est déjà connu d'incorporer des agents colorants ou pigments tels que le sulfure de cadmium (CdS), le séléniure de cadmium (CdSe) et le sulfoséléniure de Cadmium dans des matériaux céramique pour obtenir des articles en céramique orange/rouge utilisés par exemple pour réaliser des émaux, des glaçures et des récipients à usage domestique ou des revêtements de sols.

L'utilisation de ce type d'agents colorants présente de nombreux inconvénients dès lors que l'on souhaite incorporer ce type d'agents colorants dans des céramiques industrielles notamment à base de zircone frittée.

En effet, ces agents colorants manquent de stabilité à température élevée et ne présentent leurs caractéristiques colorantes que jusqu'à 1'000 ou 1'200° C. Cela limite grandement l'utilisation de ce type d'agents colorants et ne permet notamment pas la réalisation d'articles à base de zircone frittée, les températures de frittage de la zircone étant dans tous les cas supérieures à 1'100° C.

Par ailleurs, l'utilisation de ces types d'agents colorants, qui contiennent des métaux lourds, dans des objets destinés à être en contact avec la peau d'un utilisateur tel qu'une boîte de montre est sinon interdite légalement, du moins fortement déconseillée.

De plus, les agents colorants de ce type disponible commercialement ont une granulométrie incompatible pour l'obtention d'un mélange homogène avec la poudre de zircone.

L'invention a donc pour but principal de fournir d'une part un procédé de fabrication d'un article orange/rouge à base de zircone frittée et d'autre part un tel article notamment obtenu selon ce procédé, cet article ayant des propriétés mécaniques satisfaisantes tout en présentant une coloration orange/rouge au moins sur une profondeur de 5 mm.

A cet effet, l'invention a pour objet un procédé de fabrication d'un article orange/rouge à base de zircone caractérisé par le fait qu'il comprend les étapes successives consistant à :
- réaliser un premier mélange comprenant une poudre de zircone, 3 à 20 % en poids d'un stabilisant choisi parmi l'ensemble des oxydes comprenant l'oxyde d'yttrium, l'oxyde de magnésium, l'oxyde de cérium et l'oxyde de calcium, 0,1 % à 5 % en poids de poudres destinées à réaliser une phase vitreuse, comprenant de l'oxyde de silicium, de l'oxyde d'aluminium et de l'oxyde d'yttrium, 0,01 % à 10 % en poids d'une poudre d'oxyde cuivrique;
- réaliser un deuxième mélange comprenant ledit premier mélange et un liant;
- réaliser un mélange granulé en opérant une granulation dudit deuxième mélange;
- former une ébauche en conférant à ce deuxième mélange granulé la forme de l'article désiré;
- fritter sous air pendant au moins trente minutes à une température comprise entre 1'110 et 1'600° C, et
- recuire l'article désiré à une température comprise entre 700° C et 1'350° C pendant une période comprise entre 30 minutes et 20 heures dans une atmosphère réductrice ayant une pression partielle d'oxygène comprise entre 10⁻⁶ et 10⁻² atmosphère, et
- polir ladite ébauche frittée.

Le procédé de l'invention permet par l'incorporation de poudre d'oxyde de cuivrique (CuO) dans le mélange à fritter, une diminution des températures de frittage. L'oxyde cuivrique agit aussi comme un des éléments déterminant dans la coloration orange/rouge que l'on souhaite donner à l'article.

En effet, la couleur de l'article après l'opération de frittage en présence de CuO est verte en raison d'une accumulation de CuO à l'état d'oxydation + 2 aux joints de grains. Puis au cours d'une étape ultérieure du procédé de l'invention, appelée étape de recuit, on profite de la présence de CuO (état d'oxydation +2) pour le réduire en Cu₂O (état d'oxydation +1) voire réduire une partie du Cu₂O en cuivre métallique sous forme colloïdale (état d'oxydation 0). Après cette étape de recuit l'article présente une couleur située dans la gamme allant du jaune orangé au rouge voire rouge bordeaux en fonction des quantités respectives de cuivre aux états d'oxydation +2, +1, 0 présentes aux joints de grains. La couleur de l'oxyde cuivrique (CuO) correspondant à l'état d'oxydation +2 est verte, la couleur de l'oxyde cuivreux (Cu₂O) correspondant à l'état d'oxydation +1 est jaune/orange et la couleur du cuivre métallique (Cu) sous forme colloïdale est rouge/bordeaux.

Les quantités respectives d'oxydes de cuivre et de cuivre, correspondant aux états d'oxydation +2, +1, 0 présentes aux joints de grains sont déterminées par les conditions du recuit, plus précisément en faisant varier la pression partielle d'oxygène dans l'environnement du four où a lieu le recuit.

Selon un mode de réalisation, le premier mélange comprend entre 0 1 et 1 % en poids de poudres d'oxydes pour la phase vitreuse et entre 0,01 à 2 % et, de préférence, de 0,05 à 0,5 % en poids de poudre d'oxyde cuivrique (Cu⁺²O).

L'invention a également pour objet un article décoratif orange/rouge à base de zircone obtenu notamment selon le procédé décrit ci-dessus, caractérisé en ce qu'il est constitué d'une pièce frittée à partir d'une pièce moulée comprenant en substance une matrice d'oxyde de zirconium, 3 à 20 % en poids d'au moins un stabilisant choisi parmi l'ensemble des oxydes comprenant l'oxyde d'yttrium, l'oxyde de magnésium, l'oxyde de cérium et l'oxyde de calcium, 0,1 à 5 % en poids d'une phase vitreuse, comprenant de l'oxyde de silicium, de l'oxyde d'aluminium et de l'oxyde d'yttrium, et 0,01 % à 10 % en poids d'oxydes de cuivre ou d'un mélange de cuivre et d'oxydes de cuivre.

De tels articles ont l'avantage de présenter un brillant intense après polissage et sont ainsi particulièrement adaptés à la réalisation d'articles décoratifs tels que des éléments constitutifs de boîtes de montre.

D'autres caractéristiques et avantages de l'invention apparaîtront à la lumière de la description qui suit d'un exemple de réalisation du procédé de l'invention.

Le procédé de fabrication de l'invention qui va maintenant être décrit en détail est celui qui permet de réaliser un article à base de zircone frittée orange/rouge dont l'aspect et les propriétés mécaniques sont particulièrement adaptés à la réalisation de pièces constitutives de montres bracelet ou à la réalisation de tout autre article décoratif.

L'article en zircone orange/rouge obtenu selon ce procédé comprend 85 à 98,5 % en poids de zircone stabilisée et le complément en poids c'est-à-dire 0,1 à 5 % en poids d'une phase vitreuse réalisée à base d'oxyde de silicium, d'oxyde d'aluminium et d'oxyde d'yttrium, et de 0,01 % à 10 % en poids d'oxydes de cuivre ou d'un mélange de Cu et d'oxydes de cuivre.

La zircone est stabilisée de façon classique en phase tétragonale par au moins un stabilisant choisi parmi l'ensemble des oxydes comprenant l'oxyde d'yttrium, l'oxyde de magnésium, l'oxyde de cérium et l'oxyde de calcium, ce stabilisant étant en quantité de 3 à 20 % en poids par rapport à la zircone.

Pour réaliser cet article, on procède selon un exemple de mise en oeuvre du procédé de l'invention de la façon suivante :

On pèse 985,5 grammes de poudre de zircone stabilisée à 5,3 % en poids d'oxyde d'yttrium. La poudre utilisée a une taille granulométrique moyenne de l'ordre du micromètre typiquement, de 0,5 micromètre. Une telle poudre est vendue sous la référence TZ-3Y par la société Tosho Corporation, Japon.

On pèse ensuite 10 grammes d'un mélange de poudre d'oxyde de silicium, d'oxyde d'aluminium et d'oxyde d'yttrium qui sera destiné à former une phase vitreuse au moment du frittage ultérieur.

De préférence, la phase vitreuse comprend des quantités sensiblement égales en poids de chacun des oxydes mentionnées ci-dessus, et de façon encore plus préférée, le mélange comprend 29 % en poids d'oxyde de silicium, 29 % en poids d'oxyde d'aluminium et 42 % en poids d'oxyde d'yttrium.

La poudre de silicium utilisée a une taille granulométrique moyenne inférieure au micromètre, typiquement 40 nanomètres et est vendue sous le nom Aerosil OX50 par la société Cerdec, Allemagne.

La poudre d'oxyde d'aluminium utilisée a une taille granulométrique moyenne de l'ordre de grandeur du micromètre typiquement 0,5 micromètre et est vendue sous le nom CR30 par la société Baikowski, France.

La poudre d'oxyde d'yttrium utilisée a une taille granulométrique moyenne de l'ordre de grandeur du micromètre, typiquement de 2,4 micromètres et est vendue sous la référence No 95 834 par la société Fluka, Allemagne.

On pèse enfin 4,5 grammes d'oxyde cuivrique (Cu²⁺O), la poudre utilisée a une taille granulométrique de l'ordre de grandeur du micromètre, typiquement 1,7 micromètre et est vendue sous la référence No 61 202 par Fluka, Allemagne.

On notera que toutes ces poudres doivent de préférence présenter une pureté supérieure à 99,5 %.

Une fois le pesage des poudres terminé, l'ensemble de ces poudres sont mélangées et homogénéisées en milieu humide. Dans la phase finale d'homogénéisation, on ajoute environ 50 grammes d'un liant, par exemple un alcool polyvinylique.

On procède ensuite au séchage du mélange par exemple dans un atomiseur classique.

Le granulé obtenu est tamisé à 315 micromètres.

Le granulé tamisé est ensuite pressé dans un moule ayant la configuration de l'article que l'on désire obtenir afin de former une ébauche de ce dernier.

L'article dans sa forme générale quasi finale est placé dans un four de frittage. On notera à ce propos que le frittage peut être effectué sous air. L'article est alors chauffé dans une première phase à une vitesse de 30° par heure jusqu'à environ 1'000° C, puis dans une deuxième phase à une vitesse de 50° par heure jusqu'à la température de 1'350° C. L'article est maintenu à cette température pendant au moins trente minutes et de préférence pendant une heure.

On notera que le frittage peut bien entendu être effectué à toute autre température supérieure ou égale à 1'100° et inférieure à 1'600° C.

Au cours du frittage, l'oxyde de silicium, l'oxyde d'aluminium et l'oxyde d'yttrium forment une phase vitreuse qui vient se concentrer avec l'oxyde de cuivre à l'état d'oxydation +2 aux joints de grains, ce qui confère une couleur verte à l'article après le frittage.

On notera que la présence d'oxyde cuivrique diminue avantageusement la température de frittage.

Après cette opération de frittage l'article est placé dans un four de recuit dans lequel il est possible de choisir l'atmosphère. L'article désiré peut être recuit soit dans une atmosphère d'hydrogène (H₂) soit encore dans une atmosphère comportant un mélange d'azote et d'hydrogène (N₂/H₂).

Au cours de cette opération de recuit, la pression partielle d'oxygène dans le four est comprise entre 10⁻⁶ et 10⁻² atmosphère, la température de recuit est comprise entre 700° C et 1'350° C et le temps de recuit est compris généralement entre 30 minutes et 20 heures. Selon un mode de mise en oeuvre préféré du procédé de l'invention, la pression partielle d'oxygène est comprise entre 10⁻⁶ et 10⁻² atmosphère, la température de recuit est comprise entre 900 et 1'150°C et le temps de recuit est compris entre 8 et 15 heures. On comprendra que la profondeur de la coloration dans la masse de l'article varie proportionnellement avec le temps de recuit.

La couleur de l'article obtenu après l'opération de recuit est jaune orange ou rouge ou a une nuance de couleur comprise entre le jaune orange et le rouge en fonction des conditions de recuit.

L'article est alors refroidi puis usiné pour obtenir une forme adaptée à son utilisation finale. On notera que la coloration est réalisée dans la masse si bien qu'une opération d'usinage de l'article n'altère aucunement sa couleur.

Enfin, l'article est poli par exemple à l'aide d'une pâte de diamant, l'article ainsi obtenu a un aspect brillant jaune orange ou rouge ou une nuance comprise entre ces couleurs en fonction des conditions du recuit de sorte qu'il présente des caractéristiques esthétiques attractives et intéressantes, notamment pour des applications dans le domaine horloger.

Selon un autre exemple de réalisation du procédé de l'invention, on a suivi le mode opératoire décrit précédement pour réaliser des maillons de bracelet de montre de 20mm de long, 7mm de large et 3mm d'épaisseur. Dans cet exemple on a utilisé la composition suivante: 0,26% en poids de SiO₂, 0,26% en poids de Al₂O₃, 0,38% en poids de Y₂O₃ en phase vitreuse, 0,45% en poids de CuO, et le solde soit 98,65% en poids de ZrO₂ stabilisée. Une fois configurés dans leur forme finale désirée, les maillons ont été frittés sous air pendant 2 heures à 1400°C. Ces maillons ont ensuite été recuits pendant 2 heures à 1'200°C dans une atmosphère de Formiergas comprenant 8% de H₂ et 90% de N₂. Les maillons ont été refroidis puis polis miroir.

Les maillons obtenus avaient un aspect brillant bordeau. On a également constaté après rupture d'un maillon que la coloration s'est faite dans la masse.

Selon un encore autre exemple de réalisation du procédé de l'invention, on a suivi le mode opératoire décrit précédement pour réaliser des carrures de montre circulaires de 30mm de diamètre et de 5mm d'épaisseur. Dans cet exemple on a utilisé la composition suivante: 0,26% en poids de SiO₂, 0,26% en poids de Al₂O₃, 0,38% en poids de Y₂O₃ en phase vitreuse, 0,30% en poids de CuO, et le solde soit 98,8% en poids de ZrO₂ stabilisée. Une fois configurées dans leur forme finale désirée, les carrures ont été frittées sous air pendant 2 heures à 1550°C. Ces carrures ont ensuite été recuites pendant 2 heures à 1'000°C dans une atmosphère de Formiergas comprenant 8% de H₂ et 90% de N₂. Les carrures ont été refroidies puis polies miroir. Les carrures obtenues avaient un aspect brillant bordeaux.

## Revendications

1. Procédé de fabrication d'un article orange/rouge à base de zircone **caractérisé par le fait qu'**il comprend les étapes successives consistant à :
- réaliser un premier mélange comprenant une poudre de zircone, 3 à 20 % en poids d'un stabilisant choisi parmi l'ensemble des oxydes comprenant l'oxyde d'yttrium, l'oxyde de magnésium, l'oxyde de cérium et l'oxyde de calcium, 0,1 % à 5 % en poids de poudres destinées à réaliser une phase vitreuse, comprenant de l'oxyde de silicium, de l'oxyde d'aluminium et de l'oxyde d'yttrium, 0,01 % à 10 % en poids d'une poudre d'oxyde cuivrique;
- réaliser un deuxième mélange comprenant ledit premier mélange et un liant;
- réaliser un mélange granulé en opérant une granulation dudit deuxième mélange;
- former une ébauche en conférant à ce deuxième mélange granulé la forme de l'article désiré;
- fritter sous air pendant au moins trente minutes à une température comprise entre 1'100 et 1'600° C, et
- recuire l'article désiré à une température comprise entre 700° C et 1'350° C pendant une période comprise entre 30 minutes et 20 heures dans une atmosphère réductrice ayant une pression partielle d'oxygène comprise entre 10⁻⁶ et 10⁻² atmosphère, et
- polir ladite ébauche frittée.

2. Procédé selon la revendication 1, dans lequel le premier mélange comprend 0,1 à 1 % en poids de poudres destinées à former la phase vitreuse.

3. Procédé selon la revendication 1 ou 2, dans lequel les poudres destinées à réaliser une phase vitreuse comprennent des quantités en poids sensiblement égales d'oxyde de silicium, d'oxyde d'aluminium et d'oxyde d'yttrium.

4. Procédé selon la revendication 1 ou 2, dans lequel les poudres destinées à réaliser une phase vitreuse comprennent 29 % en poids d'oxyde de silicium, 29 % en poids d'alumine et 42 % en poids d'oxyde d'yttrium.

5. Procédé selon l'une des revendications 1 à 4, **caractérisé en ce que** le premier mélange comprend 0,01 à 2 %, et de préférence 0,05 à 0,5 %, en poids de poudre d'oxyde cuivrique.

6. Procédé selon l'une quelconque des revendications précédentes, **caractérisé en ce que** le stabilisant est l'oxyde d'yttrium.

7. Procédé selon l'une quelconque des revendications précédentes, **caractérisé en ce que** la température de recuit est comprise entre 900 et 1'150° C et **en ce que** l'atmosphère réductrice a une pression partielle d'oxygène comprise entre 10⁻⁶ et 10⁻² atmosphère.

8. Article décoratif orange/rouge à base de zircone obtenu à partir du procédé selon l'une quelconque des revendications précédentes, **caractérisé en ce qu'**il est constitué d'une pièce frittée à partir d'une pièce moulée comprenant en substance une matrice d'oxyde de zirconium, 3 à 20 % en poids d'au moins un stabilisant choisi parmi l'ensemble des oxydes comprenant l'oxyde d'yttrium, l'oxyde de magnésium, l'oxyde de cérium et l'oxyde de calcium, 0,1 à 5 % en poids d'une phase vitreuse, comprenant d'oxyde de silicium, de l'oxyde d'aluminium et d'oxyde d'yttrium, et 0,01 % à 10 % en poids d'oxydes de cuivre, ou d'un mélange de cuivre et d'oxydes de cuivre.

9. Article décoratif orange/rouge à base de zircone selon la revendication 8, **caractérisé en ce qu'**il est obtenu selon l'une quelconque des revendications 1 à 7.

## Patentansprüche

1. Verfahren zur Herstellung eines orange-roten Gegenstandes auf der Basis von Zirkoniumoxid, **dadurch gekennzeichnet, daß** es die aufeinanderfolgenden Schritte umfaßt, die darin bestehen:
- ein erstes Gemisch herzustellen, das ein Zirkoniumoxid-Pulver, 3 bis 20.Gew.-% eines Stabilisators, der aus der Gruppe von Oxiden gewählt ist, die Yttriumoxid, Magnesiumoxid, Ceroxid und Calciumoxid umfaßt, 0,1 bis 5 Gew.-% Pulver, die dazu bestimmt sind, eine glasartige Phase zu schaffen und Siliciumoxid, Aluminiumoxid und Yttriumoxid umfassen, sowie 0,01 bis 10 Gew.-% eines Kupfer-II-Oxid-Pulvers umfaßt;
- ein zweites Gemisch herzustellen, das das erste Gemisch und ein Bindemittel enthält;
- ein granuliertes Gemisch herzustellen, indem das zweite Gemisch zu einem Granulat verarbeitet wird;
- ein Rohteil zu bilden, indem diesem zweiten granulierten Gemisch die Form des gewünschten Gegenstandes verliehen wird;
- ein Sintern in Luft wenigstens während dreißig Minuten bei einer Temperatur im Bereich von 1100 bis 1600 °C auszuführen und
- den gewünschten Gegenstand während einer Periode im Bereich von dreißig Minuten bis zwanzig Stunden in einer Reduktionsatmosphäre, die einen Sauerstoffpartialdruck im Bereich von 10⁻⁶ bis 10⁻² Atm hat, auf eine Temperatur im Bereich von 700 bis 1350 °C abzukühlen und
- das gesinterte Rohteil zu polieren.

2. Verfahren nach Anspruch 1, bei dem das erste Gemisch 0,1 bis 1 Gew.-% Pulver umfaßt, die dazu bestimmt sind, die glasartige Phase zu bilden.

3. Verfahren nach Anspruch 1 oder 2, bei dem die Pulver, die dazu bestimmt sind, eine glasartige Phase zu bilden, im wesentlichen gleiche Gewichtsanteile von Siliciumoxid, Aluminiumoxid und Yttriumoxid umfassen.

4. Verfahren nach Anspruch 1 oder 2, bei dem die Pulver, die dazu bestimmt sind, eine glasartige Phase zu bilden, 29 Gew.-% Siliciumoxid, 29 Gew.-% Aluminiumoxid und 42 Gew.-% Yttriumoxid umfassen.

5. Verfahren nach einem der Ansprüche 5 bis 4, **dadurch gekennzeichnet, daß** das erste Gemisch 0,01 bis 2 Gew.-% und vorzugsweise 0,05 bis 0,5 Gew.-% eines Kupfer-ll-oxid-Pulvers enthält.

6. Verfahren nach einem der vorhergehenden Ansprüche, **dadurch gekennzeichnet, daß** der Stabilisator Yttriumoxid ist.

7. Verfahren nach einem der vorhergehenden Ansprüche, **dadurch gekennzeichnet, daß** die Abkühlungstemperatur im Bereich von 900 bis 1150 °C liegt und daß die Reduktionsatmosphäre einen Sauerstoffpartialdruck im Bereich von 10⁻⁶ bis 10⁻² atm hat.

8. Orange-roter Ziergegenstand auf Zirkoniumoxid-Basis, der mit dem Verfahren nach einem der vorhergehenden Ansprüche erhalten wird, **dadurch gekennzeichnet, daß** er aus einem gesinterten Teil ausgehend von einem gegossenen Teil gebildet ist, das in der Substanz einen Zirkoniumoxid-Grundstoff, 3 bis 20 Gew.-% wenigstens eines Stabilisators, der aus der Gruppe von Oxiden gewählt ist, die Yttriumoxid, Magnesiumoxid, Ceroxid und Calciumoxid umfaßt, 0,1 bis 5 Gew.-% einer glasartigen Phase, die Siliciumoxid, Aluminiumoxid und Yttriumoxid umfaßt, und 0,01 bis 10 Gew.-% Kupferoxide oder ein Gemisch aus Kupfer und Kupferoxiden umfaßt.

9. Orange-roter Ziergegenstand auf Zirkoniumoxid-Basis nach Anspruch 8, **dadurch gekennzeichnet, daß** er nach einem der Ansprüche 1 bis 7 erhalten wird.

## Claims

1. Manufacturing method for an orange/red zirconia based article **characterised in that** it includes the successive steps of:
- forming a first mixture including a zirconia powder, 3 to 20% in weight of a stabilising agent selected from the group of oxides including yttrium oxide, magnesium oxide, cerium oxide and calcium oxide, 0.1% to 5% in weight of powders intended to form a vitreous phase, including silicon oxide, aluminium oxide and yttrium oxide, 0.01% to 10% in weight of a copper oxide powder;
- forming a second mixture including said first mixture and a binding agent;
- forming a granulated mixture by milling said second mixture;
- forming a green body by giving said second granulated mixture the shape of the desired article;
- sintering under ambiant atmosphere for at least thirty minutes at a temperature comprised between 1,100 and 1,600°C, and
- annealing the desired article at a temperature comprised between 700°C and 1,350°C for a period of time comprised between 30 minutes and 20 hours a reducing atmosphere having an oxygen partial pressure comprised between 10⁻⁶ and 10⁻² atmosphere, and
- polishing said sintered article.

2. Method according to claim 1 wherein the first mixture includes 0.1% to 1% in weight of powders intended to form the vitreous phase.

3. Method according to claim 1 or 2 wherein the powders intended to form a vitreous phase include substantially equal quantities in weight of each of silicon oxide, aluminium oxide and yttrium oxide.

4. Method according to claim 1 or 2 wherein the powders intended to form a vitreous phase include 29% in weight of silicon oxide, 29% in weight of aluminium oxide and 42% in weight of yttrium oxide.

5. Method according to any of claims 1 to 4, **characterised in that** the first mixture includes 0.01% to 2%, and preferably 0.05% to 0.5% in weight of copper oxide powder.

6. Method according to any one of the preceding claims, **characterised in that** the stabilising agent is yttrium oxide.

7. Method according to any one of the preceding claims, **characterised in that** the annealing temperature is comprised between 900 and 1,150°C and **in that** the reducing atmosphere has an oxygen partial pressure comprised between 10⁻⁶ and 10⁻² atmosphere.

8. Orange/red zirconia based decorative article in particular obtained from the method according to any one of the preceding claims, **characterised in that** it is formed of a part sintered from a moulded part including in substance a matrix of zirconium oxide, 3 to 20% in weight of at least one stabilising agent selected from the group of oxides including yttrium oxide, magnesium oxide, cerium oxide and calcium oxide, 0.1 to 5% in weight of a vitreous phase, including silicon oxide, aluminium oxide and yttrium oxide, and 0.01% to 10% in weight of copper oxides or a mixture of copper and copper oxides.

9. Orange/red zirconia based decorative article according to claim 8, **characterised in that** it is obtained according to any one of claims 1 to 7.
